# DEMANDE DE BREVET EUROPEEN

(11) **EP 3 499 665 A1**
(43) Date de publication de la demande: **19.06.2019**
(21) Numéro de dépôt: 18211082.5
(22) Date de dépôt: 07.12.2018
(51) Int. Cl.: H02G 3/04, H02G 3/06, H02G 15/013

(54) **RALLONGE ARTICULEE DE RACCORD SUR CÂBLE POUR CONNECTEUR DESTINE A ETRE RELIE A AU MOINS UN CÂBLE**

(30) Priorité: 15.12.2017 FR 1762297
(71) Demandeur: Radiall, 93300 Aubervilliers (FR)
(72) Inventeur: BOURGEAS, Fabien, 38500 Saint Nicolas de Macherin (FR); LOMUSCIO, Domenico, 38590 SILLANS (FR); BADIQUE, Vivien, 68920 Wettolsheim (FR); DUPEUX, Benoit, 38470 Vatilieu (FR)
(74) Mandataire: Nony

(57) **Abrégé**

La présente invention concerne une rallonge (1) de connecteur (6) avec un raccord (20) sur câble à son extrémité éloignée du câble (7), la rallonge étant articulée selon au moins une liaison rotule à l'intérieur de laquelle le câble est protégé mécaniquement et contre les conditions de l'environnement extérieur.

## Description

### Domaine technique

La présente invention concerne le domaine de la connectique de transmission électrique et/ou de données.

La présente invention vise à déporter un raccord sur câble de la partie arrière d'un corps de connecteur à laquelle il est usuellement fixé directement. Ce raccord sur câble peut être de type presse-étoupe, gaine thermo-rétractable ou thermocollante, manchon élastomère, surmoulage par exemple.

Elle concerne donc plus particulièrement une rallonge articulée de raccord sur câble pour connecteur destiné à être relié à au moins un câble supportant des contacts.

L'invention s'applique de manière plus générale à tout type de connectique de transmission de signaux électriques et/ou de données et/ou de signaux radio-fréquences (RF) et/ou de signaux optiques.

L'invention s'applique en particulier pour une fiche de connecteur destinée à être montée sur au moins un câble supportant un ou plusieurs contacts, et à être connectée à une embase d'un panneau de boitier d'un équipement électronique.

Ces contacts peuvent être de type RJ45, de puissance, de données, combinés ou optiques. Ces contacts peuvent en particulier être une interface de convertisseur optoélectronique de type SFP/SFP+/QSFP/QSFP+, ou des contacts optiques.

Les fiches concernées en particulier sont celles de connexion aux embases d'équipements électroniques qui mettent en oeuvre plusieurs voies optiques et/ou électriques avec des connexions, que l'on retrouve en environnement extérieur et/ou en conditions sévères notamment dans les installations de télécommunications telles que des antennes-relais de téléphonie mobile, dans les réseaux de transmission de données à haut débit vers l'habitat ou l'industrie, dans les réseaux de caméras de surveillance ou encore pour la transmission de données dans des installations ferroviaires.

### Art antérieur

Dans le domaine de la connectique de transmission de signaux électriques et/ou de données et/ou de signaux radio-fréquences (RF) et/ou de signaux optiques, il est connu des connecteurs dont les contacts centraux sont destinés chacun à être relié à un fil ou à un contact de câble.

Ces connecteurs peuvent être soumis à des environnements extérieurs qui peuvent être très contraignants, aussi bien en termes de température et d'humidité en qu'en termes de sollicitations mécaniques, notamment lors de l'installation ou encore d'encombrement disponible.

Cela est notamment le cas entre une fiche montée sur un câble qui doit être connectée à une embase correspondante dans la plupart des équipements électroniques destinés à être implantés en environnement extérieur.

Diverses solutions sont déjà connues pour protéger mécaniquement et/ou rendre étanches les extrémités des câbles montés sur les connecteurs.

On peut citer ici tout d'abord les portions de gaine souple en matériau thermoplastique simplement emmanchées autour de l'extrémité du câble et de la partie arrière du corps de connecteur auquel le câble est relié. Cette solution de gaine uniquement emmanchée n'est pas du tout satisfaisante car elle ne réalise de fait pas de protection mécanique des contacts en cas de traction sur le câble, ce qui se produit très couramment lors d'une connexion ou après au cours de la vie du connecteur.

Une telle gaine peut être surmoulée autour du câble et du corps de connecteur. Avec une gaine surmoulée, le niveau de rétention mécanique du câble reste insuffisant de sorte qu'en cas de sollicitation mécanique par traction, les contacts peuvent être aisément endommagés.

On connaît également des connecteurs de type HDMI qui sont en deux parties articulées l'une à l'autre par liaison pivot entre elles, ce qui permet d'accompagner en partie le câble ou le circuit flexible interne lorsque ce dernier est plié. Ce type de connecteur articulé ne permet ni d'avoir une bonne étanchéité, ni de faire une rétention efficace en traction du câble.

En outre, toutes ces solutions selon l'état de l'art présentent des inconvénients majeurs.

Tout d'abord, aucune de ces solutions ne permet de faire un montage avec protection mécanique et étanchéité, in situ, c'est-à-dire sur le lieu de l'installation ou équipement électronique pour lequel le connecteur est destiné.

En outre, aucune d'entre elles ne permet d'avoir un bon contrôle du rayon de courbure qui peut être infligé au câble lors du montage in situ.

Or, dans certaines configurations, notamment de place disponible limitée, un opérateur peut involontairement conférer une courbure au câble qui peut nuire à la transmission des signaux, en particulier optiques, ou être néfaste à l'intégrité des contacts.

Enfin, quelle que soit la solution actuelle, le câble n'est pas de fait protégé mécaniquement contre un écrasement qui peut se produire in situ.

Il existe par conséquent un besoin pour améliorer les solutions de montage de connecteurs à des câbles de transmission de signaux électriques et/ou de données et/ou de signaux RF, notamment afin de protéger mécaniquement l'extrémité des câbles et leurs contacts éventuels ainsi que ceux des connecteurs, quelle que soit les types de sollicitations mécaniques auxquelles ils peuvent être confrontés, et ce tout en garantissant une étanchéité vis-à-vis de l'environnement extérieur.

Le but de l'invention est de répondre au moins en partie à ce besoin.

### Exposé de l'invention

Pour ce faire, l'invention concerne un dispositif formant une rallonge de raccord sur câble pour connecteur destiné à être relié à au moins un câble électrique et/ou optique, le dispositif comprenant :
- un premier composant comprenant une partie de raccord sur câble formant fourreau adapté pour être traversé avec étanchéité par un câble tout en assurant la protection du câble vis-à-vis de l'extérieur, et une partie d'articulation constituée par une portion de sphère formée intégralement ou fixée au fourreau du raccord sur câble,
- un deuxième composant comprenant une partie de raccord sur connecteur adaptée pour être formée intégralement ou fixée avec un corps de connecteur et une partie d'articulation constituée par une portion de sphère formée intégralement ou fixée à la partie de raccord sur connecteur,

Dans la rallonge selon l'invention:
- les portions de sphère du premier et deuxième composant délimitent chacune intérieurement un passage traversant pour le câble ;
- les portions de sphère du premier et du deuxième composant sont chacune assemblées par emmanchement avec une portion de sphère complémentaire d'un composant de la rallonge, de sorte à réaliser au moins une liaison rotule entre la partie de raccord sur câble du premier composant et la partie de raccord sur connecteur du deuxième composant.

Selon un mode de réalisation avantageux, la partie de raccord sur câble est configurée en un presse-étoupe de la rallonge.

Ainsi, l'invention consiste essentiellement à définir une rallonge de connecteur avec un raccord sur câble à son extrémité éloignée du câble, la rallonge étant articulée selon au moins une liaison rotule à l'intérieur de laquelle le câble est protégé mécaniquement et contre les conditions de l'environnement extérieur.

Ainsi, la longueur de la rallonge est parfaitement modulable selon les besoins en fonction du nombre d'éléments qui la compose.

Le raccord sur câble est configuré pour d'une part assurer une parfaite étanchéité vis-à-vis de l'extérieur.

Le diamètre des passages traversant à l'intérieur des différents composants de la rallonge et donc du raccord sur câble peut être suffisamment important pour laisser passer la majorité des types d'interfaces de signal existantes, par exemple de type optique, puissance, données, combiné, RJ45, LC Duplex, LC simplex, MPO, USB...,

Les diamètres de câble qui peuvent traverser la rallonge peuvent être très variables, par exemple dans une gamme de 4 à 11,5 mm.

La partie raccord sur câble est avantageusement configurée en un presse-étoupe de la rallonge pour pouvoir :
- garantir une étanchéité en respectant la norme IP65, IP 67, IP68, ou UL50E.
- être aisément finalisé in-situ,
- garantir une force de rétention du câble élevée, typiquement de 150N à 250N, avec un couple de serrage de 2,5 N.m que l'on peut atteindre manuellement.

Grâce à l'invention, on maîtrise le diamètre d'enroulement/courbure du câble relié au connecteur, ce qui garantit une protection mécanique du câble, notamment lors d'une traction, et des contacts centraux du connecteur et le cas échéant de ceux du câble.

De plus, les câbles et contacts sont protégés contre l'écrasement, car tous les composants de la rallonge peuvent être suffisamment rigides pour résister à ce type d'efforts.

Ainsi, on garantit la transmission des signaux électriques et/ou optiques par le câble.

En outre, la rallonge selon l'invention permet de pouvoir orienter à souhait selon toutes orientations le câble à la sortie d'un équipement électronique. La variante où l'on peut bloquer partiellement les sphères les unes par rapport aux autres permet de figer les rotules en rotation et donc le parcours suivi par le câble.

La rallonge selon l'invention est complètement modulaire et on peut rajouter autant de troisièmes composants, c'est-à-dire de protections du câble avec liaisons rotules, que l'on souhaite. Chaque rajout d'un composant supplémentaire consiste en un emmanchement à force d'une portion de sphère dans une autre d'un composant.

La longueur du câble traversée par la rallonge peut donc être adaptée à souhait selon les différentes configurations d'installations ou d'équipements électroniques auxquels les connecteurs sont reliés. Cela est avantageux notamment lorsqu'il s'agit des installations ou des équipements existants.

Selon une variante de réalisation avantageuse, la partie de raccord sur câble du premier composant comprend sur sa périphérie extérieure un filetage pour visser la bague de fermeture du raccord su câble.

Selon une autre variante de réalisation avantageuse, la partie de raccord sur connecteur du deuxième composant comprend sur sa périphérie intérieure un filetage pour visser le deuxième composant directement sur le corps de connecteur.

Selon un mode de réalisation, les portions de sphère du premier et du deuxième composant peuvent être assemblées par emmanchement directement l'une avec l'autre.

Alternativement, la rallonge peut, comprendre au moins un troisième composant comprenant au moins deux parties d'articulation constituée chacune par une portion de sphère formée intégralement ou fixée l'une à l'autre, la portion de sphère du premier composant étant assemblée par emmanchement directement avec une portion de sphère d'au moins un troisième composant pour former une liaison rotule, la portion de sphère du deuxième composant étant assemblée par emmanchement directement avec une portion de sphère d'au moins un troisième composant pour former une autre liaison rotule.

Le troisième composant peut comprendre au moins trois parties d'articulation reliées entre elles par une partie de liaison.

La partie de liaison peut être en forme générale de Y.

Selon un mode de réalisation, la rallonge comprend au moins deux troisièmes composants une portion de sphère de l'un des troisième composant étant assemblée par emmanchement directement avec une portion de sphère d'un autre des troisièmes composants pour former une autre liaison rotule.

Avantageusement, au moins une portion de sphère est constituée d'au moins deux calottes sphériques assemblées entre elles avec un joint d'étanchéité agencé à l'intérieur de leur assemblage.

Selon une première variante, chacune des deux calottes sphériques peut comprendre des reliefs et/ou creux d'encliquetage, de sorte à réaliser l'assemblage mutuel des calottes par encliquetage.

Selon une deuxième variante, chacune des deux calottes sphériques comprend des filetages, de sorte à réaliser l'assemblage mutuel des calottes par vissage.

Avantageusement, l'une des deux calottes sphériques sous la forme d'une bague comprend un cran de verrouillage adapté pour coopérer par crantage avec au moins un relief complémentaire réalisé dans l'autre des deux calottes sphériques, de sorte à verrouiller le vissage, et ce quelle que soit la rotation de la liaison rotule assemblée.

De préférence, la bague est fendue.

Selon une première alternative, deux portions de sphères assemblées directement l'une à l'autre par emmanchement étant en outre adaptées pour avoir une rotation libre de l'une par rapport à l'autre.

Selon une deuxième alternative, deux portions de sphères assemblées directement l'une à l'autre par emmanchement comprenant en outre des reliefs et/ou creux de blocage en rotation, de sorte à avoir une rotation bloquée selon un angle donné de l'une par rapport à l'autre.

Tous les composants de la rallonge sont de préférence en matériau électriquement isolant, de préférence encore dans le même matériau que celui du corps de connecteur.

L'invention a également pour objet un connecteur, destiné à être relié à au moins un câble, comprenant un corps formé intégralement ou fixé à la partie de raccord sur connecteur du deuxième composant d'une rallonge telle que décrite précédemment.

Le connecteur peut être destiné à être relié à deux câbles ou deux groupes distincts, en combinaison avec une rallonge à partie de liaison en Y, une partie d'articulation d'un troisième composant étant assemblée directement avec la partie de raccord du deuxième composant en étant traversée par les deux câbles ou groupes de câbles distincts, tandis que chacune des deux autres parties d'articulation formant les branches du Y du troisième composant est traversée par l'un des deux câbles ou groupes de câbles distincts.

L'invention a également pour objet un ensemble de connecteurs, comprenant une pluralité de connecteurs comme ci-avant, comprenant une gaine enveloppant tout ou partie des composants de toutes les rallonges.

L'ensemble peut comprendre au moins deux connecteurs en combinaison avec une rallonge à partie de liaison en Y, une partie d'articulation d'un troisième composant étant traversée par un seul câble ou un seul groupe de câbles, tandis que chacune des deux autres parties d'articulation formant les branches du Y du troisième composant est assemblée directement avec la partie de raccord du deuxième composant d'un des connecteurs, en étant traversée par une partie du seul câble ou du seul groupe de câbles.

Cette variante selon l'invention avec un composant en Y permet de protéger et séparer des câbles hybrides, c'est-à-dire avec des fils de transmission de signaux mixtes, par exemple des fils de transmission de signaux en RJ45 séparés de fils de puissance, des fibres optiques séparés de fils de puissance, des fils de transmission de données séparés des fils de puissance. Cette variante ne se limite pas à deux connecteurs à relier à un câble, ou deux câbles à relier à un connecteur, mais à de multiples connecteurs ou câbles.

L'invention concerne également sous un autre de ses aspects, un procédé de montage in-situ d'un connecteur avec une rallonge décrite précédemment, sur au moins un câble, comprenant les étapes suivantes :
a/ enfilement du ou des câbles à l'intérieur des composants de la rallonge;
b/ connexion des contacts centraux du câble avec ceux du connecteur;
c/ le cas échéant, fixation de la partie raccord du deuxième composant avec le corps du connecteur ;
d/ réalisation du raccord sur câble avec la partie raccord sur câble du premier composant de la rallonge.

L'étape a/ est réalisée avec les composants de la rallongé déjà assemblés par emmanchement entre eux, ou non.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue en perspective en éclaté d'un exemple de rallonge de connecteur avec un presse-étoupe selon l'invention;
- la figure 2 est une en perspective en éclaté d'une variante avantageuse de la rallonge de connecteur avec un presse-étoupe selon l'invention ;
- la figure 3 est une vue en perspective de la rallonge selon la figure 2 une fois assemblée et avec le presse-étoupe fixé sur la rallonge;
- la figure 3A est une vue en coupe longitudinale de la figure 3;
- la figure 3B est une vue en coupe de détail agrandi de la figure 3A ;
- les figures 3C et 3D sont des vues respectivement en éclaté et en coupe longitudinale d'une variante d'assemblage d'une rallonge de connecteur selon l'invention ;
- la figure 4 est une vue en perspective d'un connecteur reliée à un câble et sur lequel est fixé une rallonge avec son presse-étoupe selon les figures 3 à 3B ;
- la figure 5 est une vue en perspective d'une variante avantageuse en forme de Y d'un composant de la rallonge selon l'invention ;
- la figure 6 est une vue en perspective d'une variante de la rallonge selon les figures 3 à 3B ;
- la figure 7 est une vue en perspective d'une fiche de connecteur à convertisseur optoélectronique destiné à être reliée à un câble et dont le corps est intégral avec la partie de raccord sur connecteur d'une rallonge avec son presse-étoupe selon l'invention ;
- les figures 8 à 10 sont des vues en perspective d'autres types de connecteur destinés à être relié chacun à un câble et dont le corps est fixé par vissage à la partie de raccord sur connecteur d'une rallonge avec son presse-étoupe selon l'invention ;
- la figure 11 illustre en vue en perspective d'exemples de rallonge selon l'invention avec la variante de composant en Y comme selon la figure 5 ;
- la figure 12 est une vue en perspective de connecteur ou d'ensemble de connecteurs avec les rallonges selon la figure 11 ;
- la figure 13 est une vue en perspective d'un ensemble de connecteurs de types variés, chacun avec une rallonge selon l'invention, rallonges reliées au câble par une gaine.

La rallonge 1 selon l'invention est une rallonge articulée de raccord sur câble 4 pour un connecteur 6 relié à au moins un câble 7.

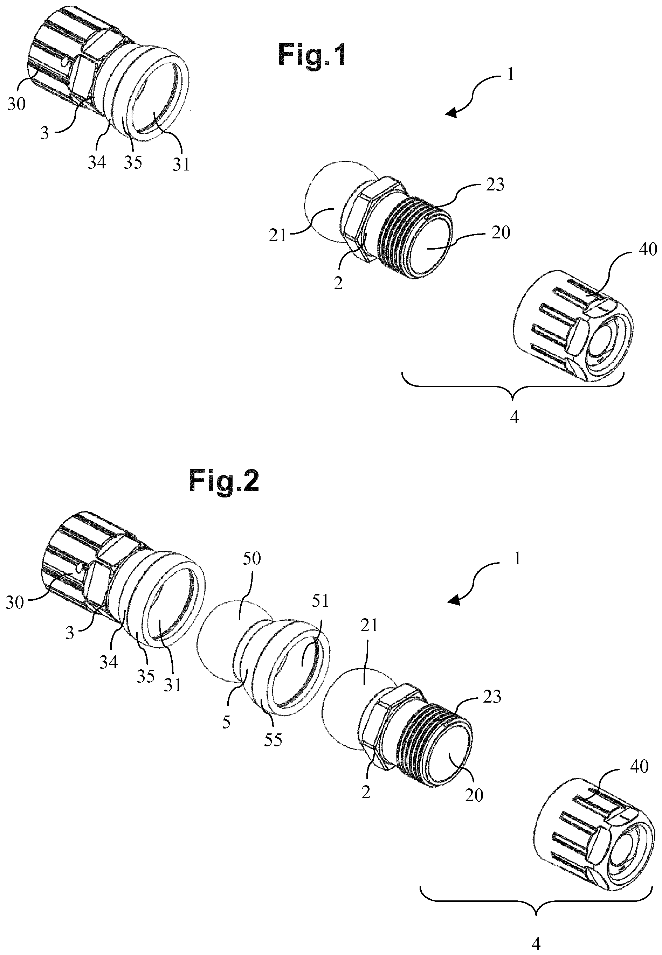

Telle qu'illustrée en figure 1, dans son mode de réalisation avec le moins de pièces, la rallonge 1 comprend deux composants 2, 3 articulés l'une par rapport à l'autre par une liaison rotule.

Le premier composant 2 comprend une partie de raccord sur câble 20 sous la forme d'un fourreau adapté pour être traversé avec étanchéité par le câble 7 tout en assurant la protection du câble vis-à-vis de l'extérieur, et une partie d'articulation 21 constituée par une portion de sphère formée intégralement ou fixée au fourreau 20 du raccord sur câble.

La portion de sphère 21 est percée d'un passage traversant 22 pour le câble dans la continuité de celui du fourreau 20.

Le deuxième composant 3 comprend une partie de raccord sur connecteur 30 adaptée pour être formée intégralement ou fixée avec le corps 60 de connecteur et une partie d'articulation 31 constituée par une portion de sphère formée intégralement ou fixée à la partie de raccord sur connecteur,

La portion de sphère 31 est percée d'un passage traversant 32 pour le câble.

Pour réaliser la liaison rotule de la rallonge articulée 1, les portions de sphère 21, 31 sont assemblées entre elles, par emmanchement à force.

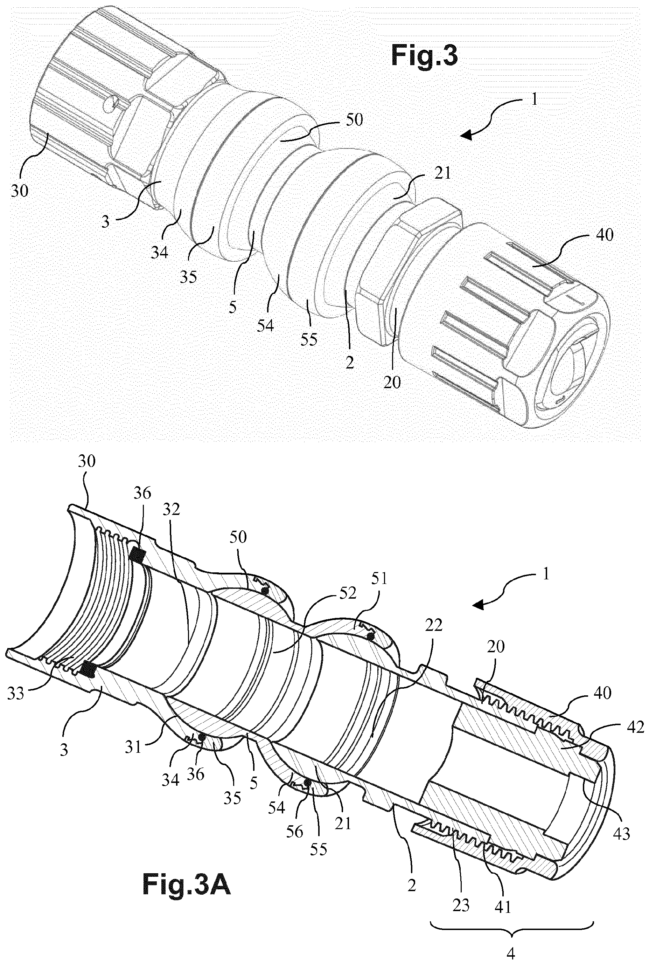

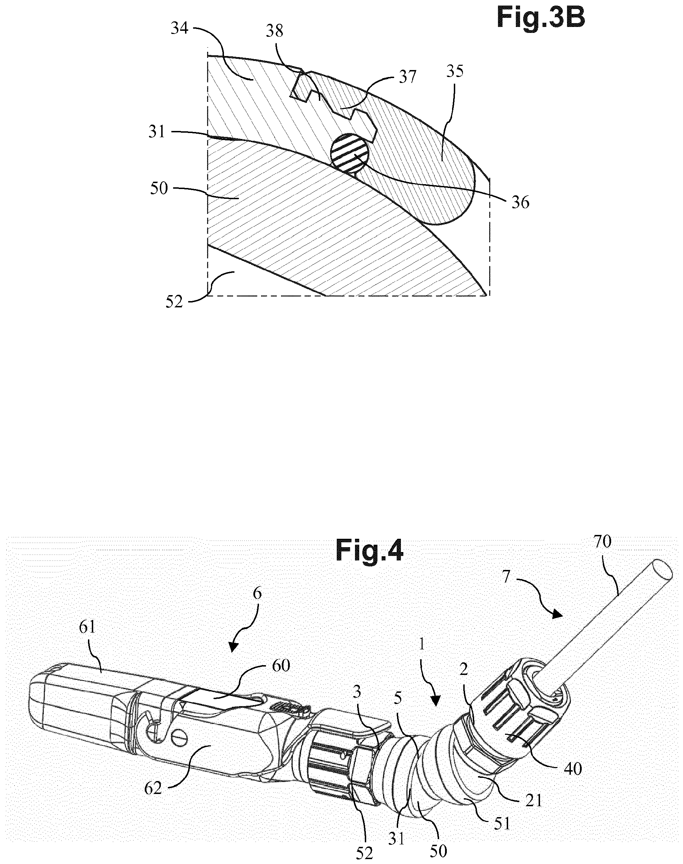

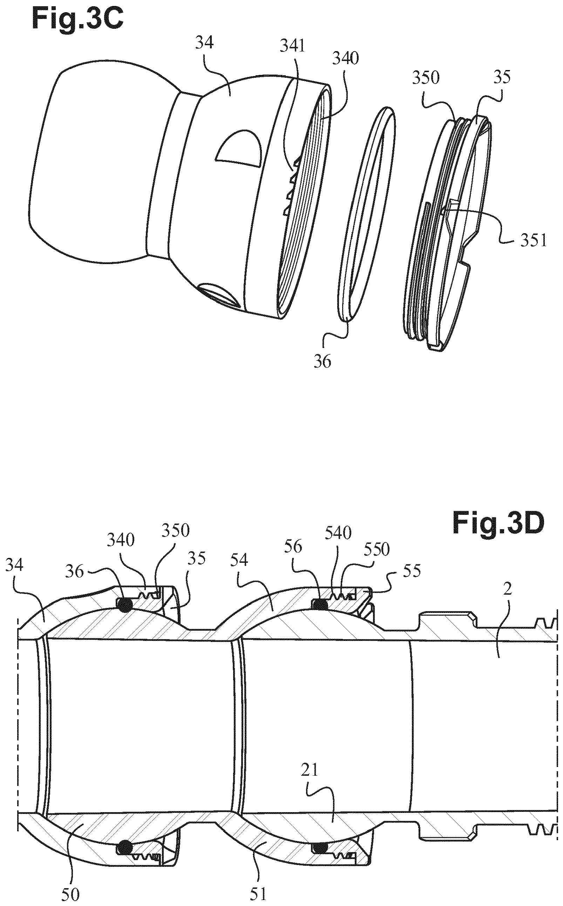

Dans le mode de réalisation des figures 2, 3, 3A et 3B, la rallonge articulée 1 comprend un composant supplémentaire 5 qui augmente la longueur de la rallonge articulée 1 et qui lui rajoute une liaison rotule supplémentaire.

Plus précisément, le composant supplémentaire 5 comprend deux parties d'articulation 50, 51 constituée chacune par une portion de sphère formée intégralement dans la même pièce.

Un premier assemblage par emmanchement est ainsi réalisé entre la portion de sphère 21 du composant 2 et la portion de sphère 51 du composant supplémentaire 5 pour former une première liaison rotule.

Un deuxième assemblage par emmanchement est réalisé entre la portion de sphère 31 du composant 3 et la portion de sphère 50 du composant supplémentaire 5 pour former une deuxième liaison rotule.

Plusieurs éléments 5 peuvent être emboités à la suite selon la longueur souhaitée de rallonge.

Ainsi, la rallonge 1 des figures 2 à 3B, constituée des trois composants 2, 3, 5 est articulée avec deux liaisons rotule.

Lorsque la rallonge articulée 1 est fixée sur le corps 60 du connecteur, on peut munir la partie de raccord sur connecteur 30 du composant 3, prévue à cet effet d'un filetage 33. Comme montré en figure 3A, ce filetage peut être un filetage intérieur 33 qui va être vissé sur un filetage extérieur, non représenté du corps 60 de connecteur 6 pour réaliser la fixation souhaitée.

Pour réaliser le presse-étoupe 4 qui coopère avec la rallonge 1 selon l'invention, on peut munir la partie raccord sur câble 20 du composant 2 d'un filetage extérieur 23 sur lequel vient se visser un écrou 40 au filetage intérieur 41 complémentaire, comme montré en figure 3A.

Au préalable, un premier joint fendu 42 ainsi qu'une bague fendue 43 sont positionnés autour du câble 7. Comme montré sur la figure 3A, l'agencement du joint 42 et de la bague 43 maintenus entre la partie 20 du composant 2 et l'écrou 40 permet lorsqu'on vient visser ce dernier de gonfler le joint 42 radialement vers l'intérieur et ainsi d'assurer à la fois la rétention mécanique du câble 7 et l'étanchéité autour de la gaine 70 de celui-ci.

Pour chaque liaison rotule, il est préférable de prévoir une étanchéité à l'interface entre portions de sphère mâle et femelle.

La figure 3B illustre une solution simple à mettre en oeuvre et efficace pour réaliser cette étanchéité : la portion de sphère femelle 31 est constituée de deux calottes sphériques 34, 35 assemblées entre elles en maintenant un joint annulaire 36 qui vient s'appuyer contre une surface de la portion de sphère mâle 50.

Comme montré sur cette figure 3B, l'assemblage entre les deux calottes 34, 35 peut être réalisé par encliquetage, l'une et/ou l'autre des deux calottes pouvant porter des reliefs 37 et/ou creux d'encliquetage complémentaires. Ainsi, la calotte 35 sous la forme d'une bague est encliquetée sur et autour de la calotte 34.

Pour l'assemblage proprement dit de la liaison rotule avec insertion du joint 36, on peut procéder de deux manières différentes.

La première manière consiste à insérer et maintenir le joint 36 entre les deux calottes 34, 35 puis à assembler celles-ci l'une à l'autre, notamment par encliquetage, puis enfin à emmancher à force la portion de sphère mâle 50 dans la portion de sphère femelle 31.

Alternativement, on peut procéder à l'emmanchement de la portion de sphère mâle 50 dans la calotte 34, puis à l'insertion du joint autour de la portion de sphère mâle 50 et enfin à la fixation des calottes 34, 35 entre elles en maintenant le joint inséré entre elles, en formant ainsi la portion de sphère femelle 31 en liaison rotule autour de la portion de sphère mâle 50.

Alternativement, les deux pièces 34 et 35 peuvent être une seule pièce monobloc et le joint 36 peut être encastré dans la rainure ménagée par déformation ou surmoulé dans la pièce monobloc. De même, la portion de sphère male 50 est ensuite encastrée par déformation dans la portion femelle 31.

Comme montré en figures 3C et 3D, l'assemblage entre les deux calottes 34, 35 peut se faire également par vissage de la calotte 35 autour de la calotte 34.

Pour ce faire, la calotte 34 présente un filetage intérieur 340 adapté pour coopérer par vissage avec le filetage extérieur 350 de la bague 35.

Avantageusement, il est prévu de réaliser un verrouillage entre la bague 35 et la calotte 34 une fois le vissage réalisé. Ainsi, la bague 35 présente, sur sa périphérie extérieure, un cran de verrouillage 351 adapté pour coopérer par crantage avec un des reliefs complémentaires 341 réalisés en bout de la calotte 34.

Selon cette variante, la bague 35 est de préférence fendue, ce qui permet de positionner initialement la bague 35 dans l'espace à diamètre réduit autour de la portion de sphère mâle 50, par exemple entre cette dernière et la portion de sphère adjacente 51.

L'assemblage est réalisé de la manière suivante.

La portion de sphère mâle 50 est emmanchée dans la calotte 34.

Puis, la bague 35 est vissée sur et autour de la calotte 34 par le biais des filetages complémentaires 340, 350.

Lorsque le cran de verrouillage 351 se trouve en prise crantée dans l'un des reliefs complémentaires 341, l'ensemble formé la calotte 34 et la bague 35 est définitivement solidaire et le verrouillage réalisé garantit que la bague 35 ne puisse se dévisser, et ce quelle que soit la rotation de la portion de sphère 50.

Le même type d'assemblage peut être réalisé entre la bague 55 et la calotte 54 (figure 3D).

La figure 4 montre une fiche de connecteur 6 reliée à un câble 7 avec une rallonge articulée selon l'invention 1 à trois composants 2, 3, 5 qui est fixée par vissage à l'arrière du corps 60 du connecteur 6. La partie avant de cette fiche 6 peut comporter des moyens de maintien amovible d'un convertisseur optoélectronique de type SFP/SFP+, ou une interface de type RJ45 ou une interface de puissance ou de signal d'un ou plusieurs contacts optiques.

Telle qu'illustrée, la fiche 6 a une partie avant protégée mécaniquement avant utilisation par un capot 61 encliqueté sur le corps 60. Elle comporte en outre un levier de verrouillage 62 à crochets pour la verrouiller à une embase d'équipement électronique. Pour plus de détail, on pourra se reporter avantageusement à la demande de brevet européenne EP3267232A1.

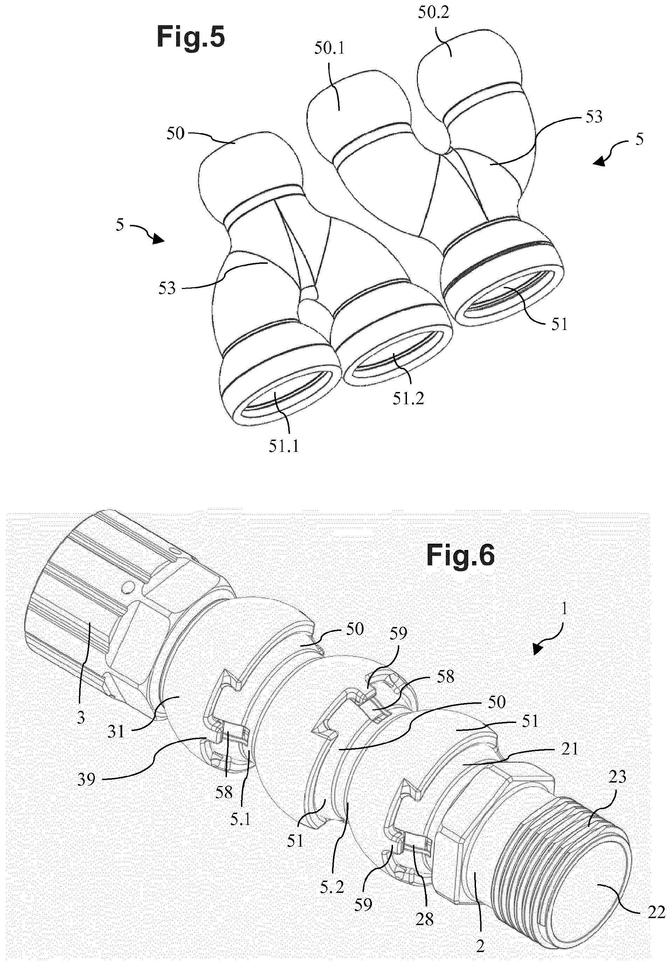

La figure 5 illustre une variante avantageuse selon laquelle un composant supplémentaire de la rallonge peut comprendre trois parties d'articulation 50, 51.1, 51.2 ou 50.1, 50.2, 51 reliées entre elles par une partie de liaison 53 en forme générale de Y. Cette forme peut être multiple dans le cas où le nombre de sorties ou d'entrées est supérieur à deux.

Ainsi, comme montré à gauche sur cette figure 5, la portion de sphère avant 50 peut être articulée en liaison rotule avec une portion complémentaire qui peut être la portion de sphère 31 d'un composant 3 et les deux portions de sphère arrière 51.1, 51.2 peuvent être reliées chacune à une portion de sphère complémentaire qui peut être directement celle d'un composant 2.

A l'inverse, comme montré à droite sur cette figure 5, la portion de sphère arrière 51 peut être articulée en liaison rotule avec une portion complémentaire qui peut être la portion de sphère 21 d'un composant 2 et les deux portions de sphère arrière 50.1, 50.2 peuvent être reliées chacune à une portion de sphère complémentaire qui peut être directement celle d'un composant 3.

Toutes les portions de sphère complémentaires de la rallonge articulée 1 selon l'invention, peuvent être assemblées entre elles de manière à pouvoir avoir une rotule complètement libre selon toutes les directions.

On peut aussi avantageusement prévoir la possibilité de bloquer en rotation entre elles les portions complémentaires de sphère, selon une ou plusieurs positions de rotulage.

La figure 6 montre cette possibilité : les portions de sphère de type mâle 20, 50 des différents composants 2, 3, 5 comprennent sur leur périphérie extérieure des gorges de blocage 28, 58 qui viennent coopérer selon plusieurs positions de rotulage données avec les languettes de blocage 39, 59 ménagées sur les portions de sphère de type femelle 31, 51.

Autrement dit, lorsqu'une portion de sphère femelle 31, 51 est orientée dans une position de rotulage donnée par rapport à la portion de sphère mâle 20, 50 autour de laquelle elle est emmanchée, les languettes 39, 59 viennent s'insérer dans les gorges 28, 58 et ainsi bloquer une des directions de rotation de la liaison rotule entre elles.

Ce système de blocage partiel de la rotule ne modifie pas les performances d'étanchéité assuré par le joint 36, 56 car la zone d'emmanchement gorges / languettes se trouve en extrémité de la sphère femelle hors de la zone du joint.

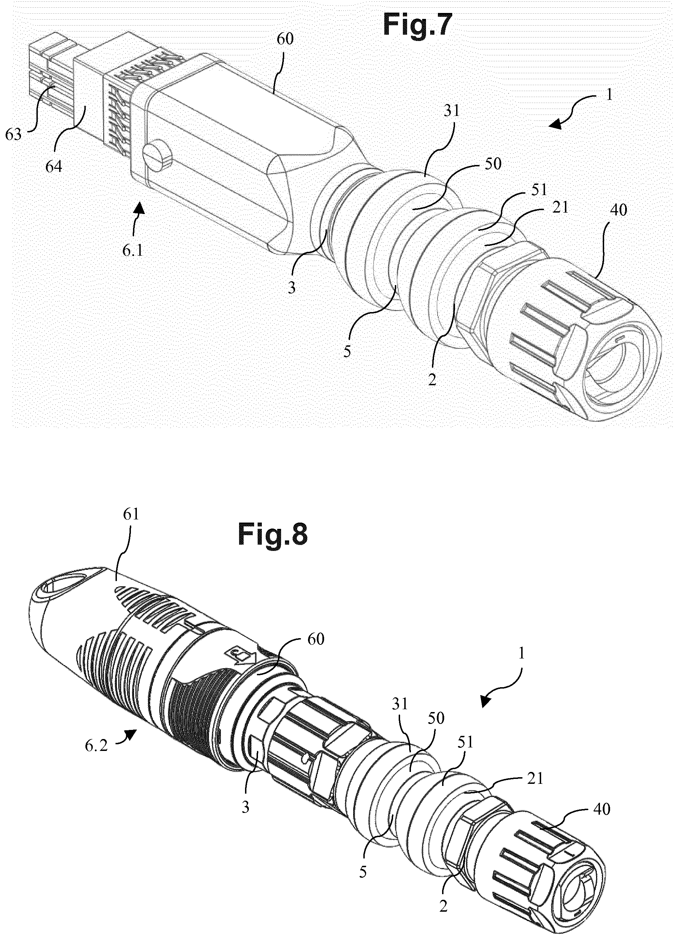

La figure 7 illustre une variante selon laquelle le composant 3 forme une seule et même pièce avec le corps 60 du connecteur 6. Autrement dit, la partie de raccord sur connecteur 30 est intégrale avec le corps 60.

Cette figure 7 montre aussi un exemple de connecteur auquel la rallonge articulée selon l'invention 1 peut convenir : il s'agit ici d'une fiche de connecteur 6.1 à convertisseur optoélectronique 63 et bague de protection 64 contre les interférences électromagnétiques (EMI pour « *ElectroMagnetic Interference* » en anglais).

La figure 8 illustre un autre exemple de connecteur, pour une utilisation outdoor, auquel la rallonge articulée selon l'invention 1 peut convenir: il s'agit ici d'une fiche de connecteur 6.2 de type push pull.

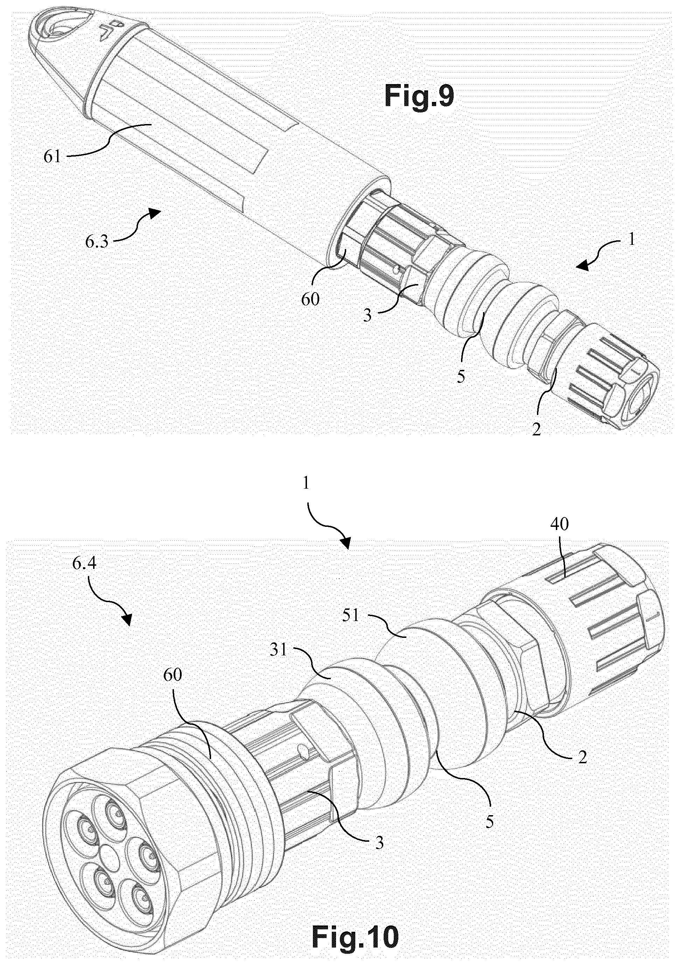

La figure 9 illustre encore un autre exemple de connecteur, pour une utilisation outdoor, auquel la rallonge articulée selon l'invention 1 peut convenir: il s'agit ici d'une fiche de connecteur 6.3 à baïonnette.

La figure 10 illustre encore un autre exemple de connecteur auquel la rallonge articulée selon l'invention 1 peut convenir: il s'agit ici d'une fiche de connecteur 6.3 coaxial 6.4.

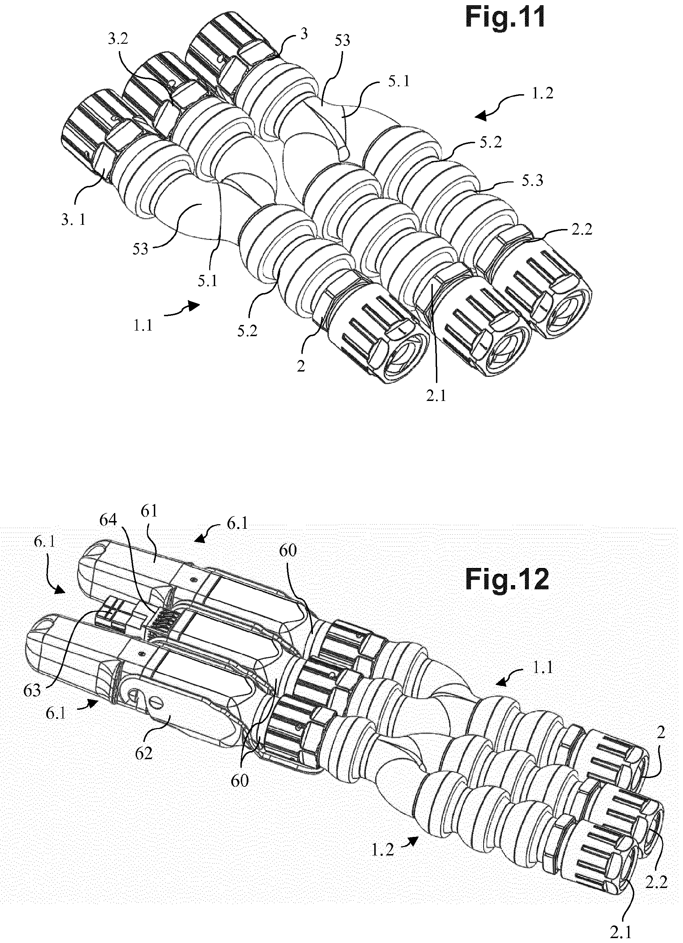

La figure 11 illustre des variantes de réalisation de rallonge 1 avec composants supplémentaires 5, dont un en forme de Y comme montré en figure 5.

Plus précisément, la rallonge articulée 1.1 sur la partie de gauche de la figure 11, comprend deux composants supplémentaires 5.1, 5.2 avec celui à l'avant qui est en forme d'Y et qui permet donc à partir d'un raccord sur câble avec un seul câble ou groupe de câble de les séparer en deux pour liaison par les deux composants 3.1, 3.2 avec deux connecteurs distincts.

La rallonge articulée 1.2 sur la partie de droite de la figure 11, comprend trois composants supplémentaires 5.1, 5.2, 5.3 avec celui à l'avant qui est en forme d'Y et qui permet donc à partir de deux câbles ou groupes de câble séparés avec les deux composants 2.1, 2.2 de les joindre pour une liaison dans un seul connecteur.

La figure 12 reprend les rallonges 1.1, 1.2 de la figure 11 et montrent leurs liaisons avec les connecteurs 6.1 comme décrit ci-dessus. Des pièces de rallonge 5 peuvent être rajoutées selon les besoins de façon indépendante selon les branches 2, 2.1 et/ou 2.2.

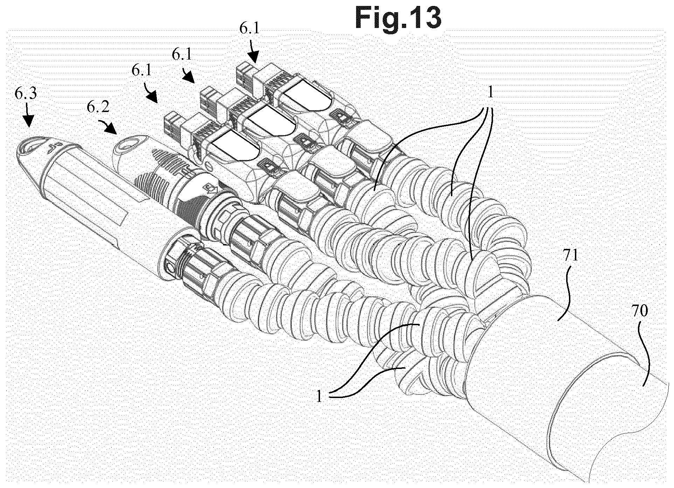

La figure 13 enfin montre un ensemble de connecteurs de types variés, 6.1, 6.2, 6.2 reliés chacun à une rallonge 1 selon l'invention, toutes les rallonges 1 étant articulées différemment grâce à leurs différentes liaisons rotules pour être introduite dans une seule et même gaine 70 de câbles ou groupe de câbles. La fonction raccordement sur le câble est assurée dans cet exemple par une gaine 71 sur le câble 70.

D'autres variantes et avantages de l'invention peuvent être réalisés sans pour autant sortir du cadre de l'invention.

Par exemple, si dans l'ensemble des exemples illustrés, la portion de sphère 31 du composant intégré ou fixé au corps de connecteur est de type femelle dans la mesure où une portion de sphère mâle 50, 21 y est emboîtée pour former une liaison rotule, on peut très bien envisager d'avoir une portion de sphère 31 mâle qui coopère avec une portion femelle.

A l'inverse, si dans l'ensemble des exemples illustrés, la portion de sphère 21 du composant supportant une partie de raccord sur câble est de type mâle, on peut très bien envisager d'avoir une portion de sphère 21 femelle.

De manière générale, toutes les combinaisons mâle/femelle peuvent être envisagées pour les différents composants de la rallonge selon l'invention.

L'invention n'est pas limitée aux exemples qui viennent d'être décrits ; on peut notamment combiner entre elles des caractéristiques des exemples illustrés au sein de variantes non illustrées.

## Revendications

1. Dispositif formant une rallonge (1) de raccord sur câble (4) pour connecteur (6) destiné à être relié à au moins un câble électrique et/ou optique (7), le dispositif comprenant :
- un premier composant (2) comprenant une partie de raccord sur câble (20) formant fourreau adapté pour être traversé avec étanchéité par un câble tout en assurant la protection du câble vis-à-vis de l'extérieur, et une partie d'articulation (21) constituée par une portion de sphère formée intégralement ou fixée au fourreau (20) du raccord sur câble,
- un deuxième composant (3) comprenant une partie de raccord (30) sur connecteur adaptée pour être formée intégralement ou fixée avec un corps (60) de connecteur et une partie d'articulation (31) constituée par une portion de sphère formée intégralement ou fixée à la partie de raccord,
rallonge dans laquelle:
- les portions de sphère du premier et deuxième composant délimitent chacune intérieurement un passage (22 ; 32) traversant pour le câble ;
- les portions de sphère (21 ; 31) du premier et du deuxième composant sont chacune assemblées par emmanchement avec une portion de sphère complémentaire (50, 51) d'un composant (2 ; 3 ; 5) de la rallonge, de sorte à réaliser au moins une liaison rotule entre la partie de raccord sur câble du premier composant et la partie de raccord sur connecteur du deuxième composant.

2. Rallonge (1) selon la revendication 1, la partie de raccord sur câble (20) étant configurée en un presse-étoupe (4) de la rallonge.

3. Rallonge (1) selon la revendication 1 ou 2, le premier composant (2) comprenant sur sa périphérie extérieure un filetage (23) pour visser la bague de fermeture (40) du raccord su câble.

4. Rallonge (1) selon l'une des revendication 1 à 3, la partie de raccord sur connecteur (30) du deuxième composant (3) comprenant sur sa périphérie intérieure un filetage (33) pour visser le deuxième composant directement sur le corps (60) de connecteur (6).

5. Rallonge (1) selon l'une des revendications précédentes, les portions de sphère (21; 31) du premier et du deuxième composant étant assemblées par emmanchement directement l'une avec l'autre.

6. Rallonge (1) selon l'une des revendications 1 à 4, comprenant au moins un troisième composant (5) comprenant au moins deux parties d'articulation (50, 51) constituée chacune par une portion de sphère formée intégralement ou fixée l'une à l'autre, la portion de sphère du premier composant étant assemblée par emmanchement directement avec une portion de sphère d'au moins un troisième composant pour former une liaison rotule, la portion de sphère du deuxième composant étant assemblée par emmanchement directement avec une portion de sphère d'au moins un troisième composant pour former une autre liaison rotule, de préférence, le troisième composant (5) comprenant au moins trois parties d'articulation (50, 51.1, 51.2 ou 50.1, 50.2, 51) reliées entre elles par une partie de liaison (53), de préférence en forme générale de Y.

7. Rallonge (1) selon la revendication 6, comprenant au moins deux troisième composants (5.1, 5.2), une portion de sphère (50) de l'un (5.1) des troisième composant étant assemblée par emmanchement directement avec une portion de sphère (51) d'un autre (5.2) des troisièmes composants pour former une autre liaison rotule.

8. Rallonge (1) selon l'une des revendications précédentes, au moins une portion de sphère (31; 51) étant constituée d'au moins deux calottes sphériques (34, 35 ; 54, 55) assemblées entre elles avec un joint d'étanchéité (36 ; 56) agencé à l'intérieur de leur assemblage,
chacune des deux calottes sphériques (34, 35 ; 54, 55) comprenant de préférence, des reliefs et/ou creux d'encliquetage (38 ; 37), de sorte à réaliser l'assemblage mutuel des calottes par encliquetage, chacune des deux calottes sphériques (34, 35; 54, 55) comprenant de préférence des filetages (340, 350 ; 540, 550), de sorte à réaliser l'assemblage mutuel des calottes par vissage, de préférence l'une (35 ; 55) des deux calottes sphériques sous la forme d'une bague, de préférence fendue, comprenant un cran de verrouillage (351), adapté pour coopérer par crantage avec au moins un relief complémentaire (341) réalisé dans l'autre (34 ; 54) des deux calottes sphériques, de sorte à verrouiller le vissage, et ce quelle que soit la rotation de la liaison rotule assemblée

9. Rallonge (1) selon l'une des revendications précédentes, deux portions de sphères assemblées directement l'une à l'autre par emmanchement étant en outre adaptées pour avoir une rotation libre de l'une par rapport à l'autre.

10. Rallonge (1) selon l'une des revendications 1 à 8, deux portions de sphères assemblées directement l'une à l'autre par emmanchement comprenant en outre des reliefs (39 ; 59) et/ou creux (28 ; 58) de blocage en rotation, de sorte à avoir une rotation bloquée selon un angle donné de l'une par rapport à l'autre.

11. Rallonge (1) selon l'une des revendications précédentes, les composants étant en matériau électriquement isolant, de préférence dans le même matériau que celui du corps de connecteur.

12. Connecteur (6), destiné à être relié à au moins un câble (7), comprenant un corps (60) formé intégralement ou fixé à la partie de raccord sur connecteur du deuxième composant d'une rallonge selon l'une des revendications précédentes.

13. Connecteur (6) selon la revendication 12, destiné à être relié à deux câbles (7.1, 7.2) ou deux groupes distincts, en combinaison avec la rallonge selon la revendication 7, une partie d'articulation (50) d'un troisième composant étant assemblée directement avec la partie de raccord du deuxième composant en étant traversée par les deux câbles ou groupes de câbles distincts, tandis que chacune des deux autres parties d'articulation (51.1, 51.2) formant les branches du Y du troisième composant est traversée par l'un des deux câbles ou groupes de câbles distincts.

14. Ensemble de connecteurs, comprenant une pluralité de connecteurs selon la revendication 18 ou 19, comprenant une gaine enveloppant tout ou partie des composants de toutes les rallonges, avec de préférence,
une partie d'articulation (51) d'un troisième composant étant traversée par un seul câble ou un seul groupe de câbles, tandis que chacune des deux autres parties d'articulation (50.1, 50.2) formant les branches du Y du troisième composant est assemblée directement avec la partie de raccord du deuxième composant d'un des connecteurs, en étant traversée par une partie du seul câble ou du seul groupe de câbles.

15. Procédé de montage in-situ d'un connecteur (6) avec une rallonge (1) selon l'une des revendications 1 à 11, sur au moins un câble (7), comprenant les étapes suivantes :
a/ enfilement du ou des câbles à l'intérieur des composants de la rallonge;
b/ connexion des contacts centraux du câble avec ceux du connecteur;
c/ le cas échéant, fixation de la partie raccord du deuxième composant avec le corps du connecteur
d/ réalisation du raccord sur câble avec la partie raccord sur câble (20) du premier composant de la rallonge.
